# EUROPEAN PATENT APPLICATION

(11) **EP 1 056 087 A2**
(43) Date of publication of application: **29.11.2000**
(21) Application number: 00304358.5
(22) Date of filing: 23.05.2000
(51) Int. Cl.: G11B 23/033

(54) **Disc cartridge**

(30) Priority: 24.05.1999 JP 14398499; 26.07.1999 JP 21014799
(71) Applicant: SONY CORPORATION, Tokyo 141 (JP)
(72) Inventor: Masugi, Shinji, Shinagawa-ku, Tokyo (JP); Higuchi, Shintaro, Shinagawa-ku, Tokyo (JP)
(74) Representative: Pratt, Richard Wilson

(57) **Abstract**

A disc cartridge in which is rotatably housed a magnetic disc. The disc cartridge has a liner on each inner surface of the main cartridge body unit on both sides of the magnetic disc housed in the main cartridge body unit. The liner is arranged on the inner surface of the main cartridge body unit so as to have an adhesion portion bonded to the inner surface of the main cartridge body unit and a non-adhesion portion separable from the inner surface of the main cartridge body unit, the non-adhesion portion of the liner is arranged in an area excluding an area of ±30° on both sides of the recording and/or reproducing apertures provided in the main cartridge body unit from a centerline bisecting the recording and/or reproducing apertures through the center of the main cartridge body unit.

## Description

The present invention relates to a disc cartridge. Illustrative embodiments of the present invention relate to a disc cartridge housing a disc-shaped recording medium, such as a magnetic disc, having a center core for clamping the recording medium to a rotating driving unit. More particularly, embodiments relate to a disc cartridge the main body portion of which housing the disc-shaped recording medium has a liner on its inner surface for protecting the disc-shaped recording medium.

Up to now, such a disc cartridge is in use which is comprised of a main cartridge body unit obtained on abutting and interconnecting an upper cartridge half and a lower cartridge half and a magnetic disc rotationally housed in the main cartridge body unit. The magnetic disc, in turn, is comprised of a flexible disc substrate and a magnetic layer formed thereon.

With this disc cartridge, a liner comprised of a non-woven fabric is arranged on the inner surface of each of the upper and lower cartridge halves making up the main cartridge body unit, for cleaning the magnetic disc housed in the main cartridge body unit and for protecting the magnetic disc. The liner arranged on the inner surface of the upper cartridge half is partially uplifted towards the magnetic disc side by plural comb-shaped ribs provided on the inner surface of the upper cartridge half. On the other hand, the liner provided on the inner surface of the lower cartridge half is partially uplifted towards the magnetic disc by a lifter in the form of a thin sheet spring provided on the inner surface of the lower cartridge half for facing the ribs provided on the upper cartridge half. That is, the liners provided on the inner surfaces of the upper and lower cartridge halves are partially swollen out by the ribs and the lifter in a direction of approaching to each other so that the swollen-out portions are contacted with the signal recording surface of the magnetic disc.

When the disc cartridge, constructed as described above, is loaded on a disc recording and/or reproducing apparatus, with the magnetic disc housed in the main cartridge body unit being clamped by the rotating driving unit provided on the disc recording and/or reproducing apparatus and run in this state in rotation, the swollen-out portions of the liners are contacted with the rotating magnetic disc to remove dust and dirt affixed to the magnetic disc.

The major portions of the liners, other than the swollen-out portions, are safeguarded from being damaged by having direct contact with the inner surface of the main cartridge body unit of high tenacity.

Meanwhile, in a disc cartridge in which the liners are configured for having positive contact with the magnetic disc to remove dust and dirt affixed to the magnetic disc, the dust and dirt detached from the magnetic disc are caught by and affixed to the liners. If the magnetic disc is run in rotation in this state, the magnetic disc tends to be damaged by the dust and dirt affixed to the liners.

In the above-described disc cartridge, since the liners are partially swollen out by the ribs and the lifter into contact with the magnetic disc at all times, the load on rotationally driving the magnetic disc is increased. With the disc recording and/or reproducing apparatus, employing such disc cartridge, it is necessary to use a large-sized driving motor of the disc rotating driving unit capable of developing a large driving torque in order to assure stabilized rotation of the magnetic disc.

In the above-described disc cartridge, if the upper and lower cartridge halves are deformed, such as with warping, the liners are contacted with an increased force against the magnetic disc by the ribs and the lifters, with the result that the load on the magnetic disc run in rotation tends to be increased. If the load on the magnetic disc is increased, the driving torque is correspondingly increased, with the result that a marked load is applied to the driving motor of the disc rotating driving unit to disable the stable magnetic disc rotation.

Meanwhile, the magnetic disc, increased in its recording capacity, the rotational speed is increased. For example, a magnetic disc having a diameter of 3.5 inch and a recording capacity not less than 200 Mbytes, is run in rotation at a speed not less than 3000 rpm. If the rotational speed of the magnetic disc is increased, the frictional force between the magnetic disc and the liner contacting with the magnetic disc is increased to damage the signal recording surface of the magnetic disc. For high-speed rotation of the magnetic disc, the rotational speed of the driving motor of the disc rotating driving unit needs to be increased. If the rotational speed is increased, the driving torque is reduced, such that, when the load applied to the magnetic disc is increased even to the slightest extent, stable rotation cannot be achieved, to render it impossible to rotate the magnetic disc at a predetermined rotational speed. In such case, information signals cannot be recorded nor reproduced with optimum recording and/or reproducing characteristics.

Embodiments of the present invention seek to provide a disc cartridge in which a disc-shaped recording medium housed in its main cartridge body unit can be cleaned as reliable protection of the disc-shaped recording medium and stable rotation of the disc-shaped recording medium run in rotation are guaranteed.

According to a first aspect of the present invention, there is provided a disc cartridge includes a disc-shaped recording medium having a clamping portion at a center portion thereof for clamping to a rotating driving unit, a main cartridge body unit for rotationally housing the disc-shaped recording medium therein, and a pair of liners each having a non-permeable heat-sensitive adhesive layer on its one surface. The main cartridge body unit is made up of an upper cartridge half and a lower cartridge half. The main cartridge body unit has recording and/or reproducing apertures for exposing at least portions of the signal recording region of the disc-shaped recording medium to outside along the radial direction of the disc. The main cartridge body unit also has a center opening at a mid portion of its lower surface for exposing the clamping portion to outside. The main cartridge body unit presents planar facing surfaces. The heat-sensitive adhesive layer has an adhesion portion bonded to the inner surface of the main cartridge body unit and a non-adhesion portion separable from the inner surface of the main cartridge body unit, the liners being arranged on the facing inner surfaces of the main cartridge body unit for sandwiching the disc-shaped recording medium in-between. The non-adhesion portions of the liners is formed in areas excluding a range of ±30° on both sides of the recording and/or reproducing apertures from a centerline bisecting the recording and/or reproducing apertures through the center of the main cartridge body unit.

Each liner is formed as an uninterrupted sheet extending from one to the other side of the recording and/or reproducing aperture and is bonded to the inner surface of the main cartridge body unit with its area excluding an area of ±30°on both sides of the recording and/or reproducing aperture from a centerline bisecting the recording and/or reproducing apertures as the non-adhesion portion. With this liner, the non-adhesion portions are endless since both sides of the adhesion portions become bonding portions to the main cartridge body unit.

If, with the present disc cartridge, the disc-shaped recording medium housed in the main cartridge body unit is run in rotation, the liners are floated by an airstream generated between the inner surfaces of the main cartridge body unit and the liners to clamp and clean the disc-shaped recording medium. Since the non-adhesion portions are formed in an area excluding an area of ±30° from the centerline bisecting the recording and/or reproducing aperture, the liner is prevented from being contacted with the disc-shaped recording medium in the vicinity of the recording and/or reproducing aperture.

The invention will now be described by way of example with reference to the accompanying drawings, throughout which like parts are referred to by like references, and in which:
Fig. 1 is a perspective view showing a disc cartridge according to an embodiment of the present invention from its upper surface side.
Fig.2 is a perspective view showing the disc cartridge from its lower surface side.
Fig.3 is an exploded perspective view showing the disc cartridge.
Fig.4 is a cross-sectional view showing a magnetic disc housed in the disc cartridge according to an embodiment of the present invention.
Fig.5 is a plan view showing an inner surface of a disc cartridge according to an embodiment of the present invention.
Fig.6 is a plan view showing the inner surface of the lower cartridge half constituting the disc cartridge according to an embodiment of the present invention.
Fig.7 is a cross-sectional view of the disc cartridge according to an embodiment of the present invention.
Fig.8 is a cross-sectional view showing a liner used for the disc cartridge according to an embodiment of the present invention.
Fig.9 is a plan view showing an inner surface of the upper cartridge half.
Fig. 10 is a plan view showing the inner surface of the upper cartridge half.
Fig. 11 is a plan view showing the inner surface of the lower cartridge half.
Fig.12 is a schematic view for explaining the angle of flexure of the magnetic disc.
Fig. 13 is a cross-sectional view showing the state of mounting the liner on the inner surface of the lower cartridge half.
Fig. 14 illustrates the method for measuring the liner stiffness.
Fig. 15 is a perspective view of a disc cartridge for illustrating the opened state of an exhaust port formed in the main cartridge body unit.
Fig. 16 is a cross-sectional view showing the state of loading of the disc cartridge on the disc recording and/or reproducing apparatus.
Fig. 17 is a cross-sectional view showing the state in which the magnetic head has a sliding contact with the magnetic disc.
Fig. 18 is a schematic cross-sectional view for illustrating the state in which the liner provided in the main cartridge body unit is flexed and deformed so as to be contacted with the magnetic disc.
Fig. 19 is an exploded perspective view showing another example of a disc cartridge according to an embodiment of the present invention.
Fig.20 is plan view showing the inner surface of an upper cartridge half constituting the disc cartridge according to an embodiment of the present invention.
Fig.21 is a plan view showing the inner surface of the lower cartridge half.

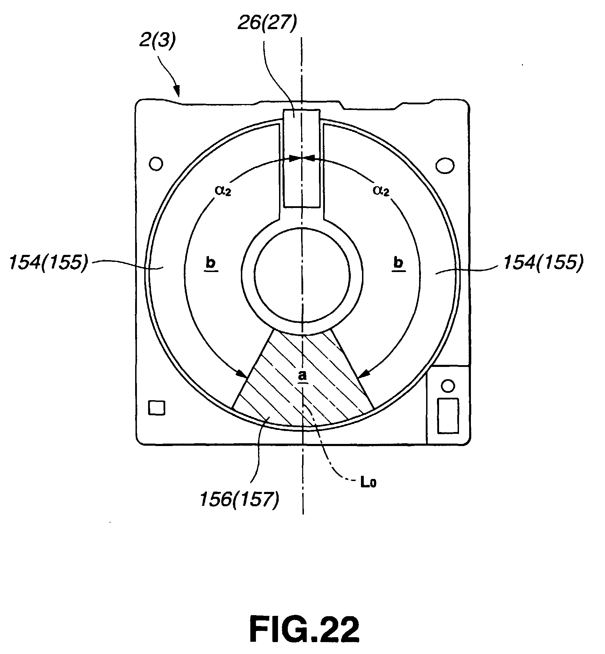

Fig.22 is a plan view of a disc cartridge corresponding to a sample 4 as contrasted to the disc cartridge according to an embodiment of the present invention.
Fig.23 is a plan view of a disc cartridge corresponding to a sample 5.
Fig.24 is a schematic cross-sectional view showing the state in which a liner provided in the main cartridge body unit is flexed and deformed so as to be contacted with the magnetic disc.

Referring to the drawings, a preferred embodiment of the present invention as applied to a disc cartridge housing a magnetic disc as a disc-shaped recording medium will be explained in detail.

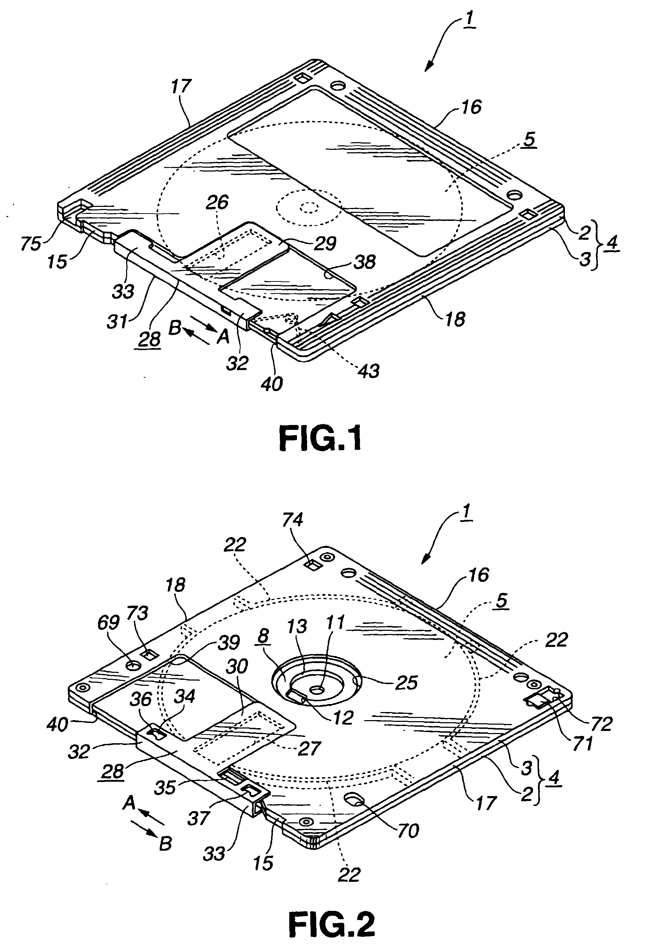

Referring to Figs.1 to 3, a disc cartridge 1 according to an embodiment of the present invention includes a main cartridge body unit 4, obtained on abutting and interconnecting an upper cartridge half 2 and a lower cartridge half 3 of a substantially rectangular profile obtained e.g., on injection molding of synthetic resin. Within this main cartridge body unit 4 is housed a magnetic disc 5 operating as a recording medium for information signals. It is noted that the upper and lower cartridge halves 2, 3 constituting the main cartridge body unit 4 are produced by injection molding an acrylonitrile butyl styrene (ABS) resin.

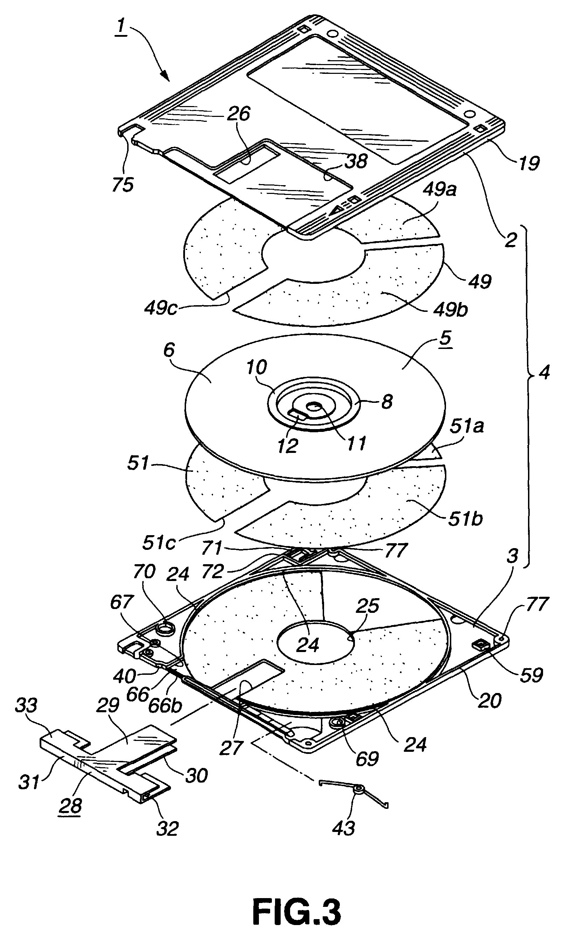

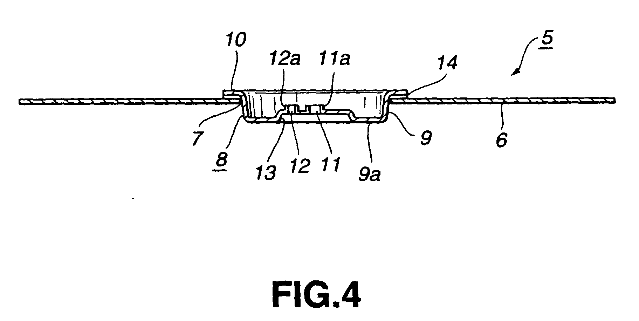

A magnetic disc 5, housed in the main cartridge body unit 4, includes a main disc member 6, approximately 3.5 inch in diameter, comprised of a flexible thin film of synthetic resin, on both surfaces of which magnetic layers are deposited, as shown in Fig.3. In the center of the main disc member 6 is bored a center opening 7, in which is fitted a center core 8, as shown in Fig.4. The center core 8 is formed of a magnetic material, such as metal, so that, when the magnetic disc 5 is loaded on a disc rotating driving unit arranged on the disc recording and/or reproducing apparatus, the center core 8 is magnetically attracted by a magnet arranged on the disc rotating driving unit to clamp the magnetic disc 5 on the disc rotating driving unit. That is the center core 8 constitutes a clamping unit for clamping the magnetic disc 5 to the disc rotating driving unit.

Referring to Fig.4, the center core 8 is formed integrally with a flat tubular swollen-out portion 9 at its center and a flange 10 acting as a mounting portion for the main disc member 6 is formed integrally with the upper end of the swollen-out portion 9. In a bottom surface 9a of the swollen-out portion 9 are bored a spindle shaft inserting opening 11 and a driving pin inserting opening 12. The spindle shaft inserting opening 11 is passed through by a spindle shaft of the disc rotating driving unit, whilst the driving pin inserting opening 12 is engaged by a driving pin provided on the disc rotating driving unit. Around the spindle shaft inserting opening 11 and the driving pin inserting opening 12 are formed upstanding wall sections 11a, 12a. These upstanding wall sections 11a, 12a support the peripheral surfaces of the spindle shaft and the driving pin, respectively, by broad surfaces to engage the spindle shaft and the driving pin reliably in the spindle shaft inserting opening 11 and in the driving pin inserting opening 12 in stabilized state.

In a bottom surface 9a of the swollen-out portion 9 is formed a disc setting portion 13 which is formed by forming a recess in the bottom surface 9a of the swollen-out portion 9 and which is set to fit in the disc table to prevent deflection of the loading position of the magnetic disc 5 relative to the disc table.

The center core 8, described above, is set, with the swollen-out portion 9 fitting in the center opening 7 of the main disc member 6 and with the flange 10 resting on one major surface of the main disc member 6. The center core 8 is mounted on the main disc member 6 by bonding the flange 10 to the main disc member 6 with an adhesive 14.

The magnetic disc 5 used here has a recording capacity not less than 100 Mbytes and is loaded on a disc rotating driving unit so as to be rotated at an rpm not less than 3000 rpm.

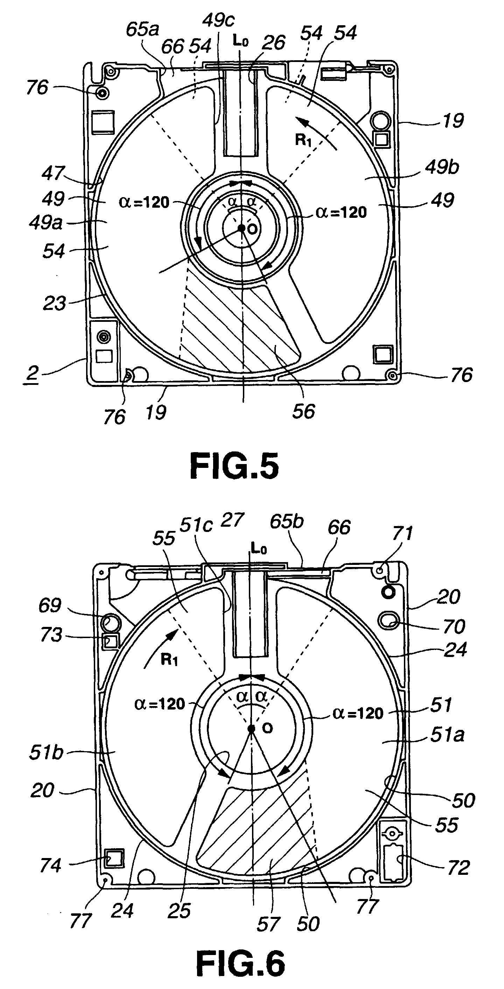

The main cartridge body unit 4, housing the magnetic disc 5, as described above, is constituted by upper and lower cartridge halves 2, 3, obtained on injection molding synthetic resin to a substantially rectangular profile, as shown in Figs. 1 to 3. On the outer rim of the upper and lower cartridge halves 2, 3, making up the main cartridge body unit 4, are formed upstanding wall sections 19, 20 abutted to each other to constitute a front wall section 15, a rear wall section 16 and facing sidewall sections 17, 18, as shown in Figs.5 and 6.

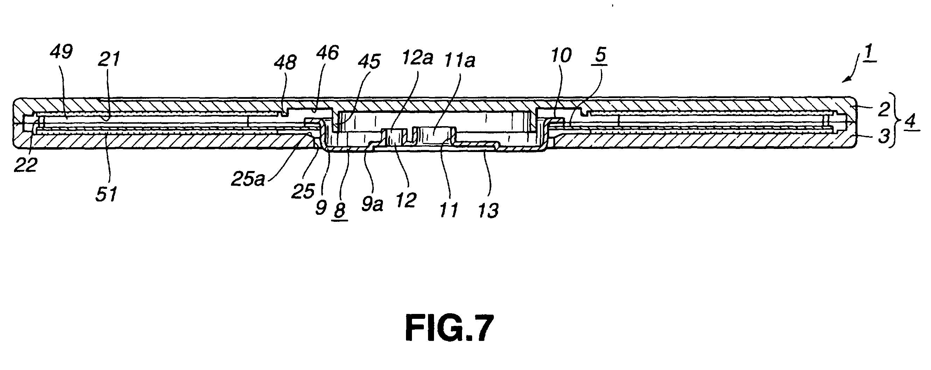

On the facing inner surfaces of the upper and lower cartridge halves 2, 3, partitioning wall delimiting wall sections 23, 24 are formed upright for constituting a partitioning wall 22 delimiting a disc housing section 21 for rotationally housing the magnetic disc 5 therein, as shown in Figs.5 and 6. These partitioning wall delimiting wall sections 23, 24 are formed to an arcuate shape inscribing the rectangular-shaped upper and lower cartridge halves 2, 3 as shown in Figs.5 and 6. When abutted together, the partitioning wall delimiting wall sections 23, 24 delimit the partitioning wall 22 as shown in Fig.7. An area defined by this partitioning wall 22 serves as the disc housing section 21. The partitioning wall 22 constituting the disc housing section 21 is formed by abutting the partitioning wall delimiting wall sections 23, 24 of an arcuate shape inscribing the rectangular-shaped upper and lower cartridge halves 2, 3 and hence surrounds substantially the entire periphery of the magnetic disc 5 housed in the disc housing section 21.

At the center of the lower cartridge half 3 constituting the lower surface of the main cartridge body unit 4 is formed a circular center opening 25 for exposing the swollen-out portion 9 of the center core 8 mounted on the magnetic disc 5 housed in the main cartridge body unit 4 to outside, as shown in Figs.2 and 3. The center opening 25 is formed only in the lower cartridge half 3, whilst the mid portion of the upper surface of the main cartridge body unit 2, constituted by the upper cartridge half 2, is closed, as shown in Figs. 1 and 3.

In registering portions of the upper cartridge half 2, constituting the upper surface of the main cartridge body unit 4, and the lower cartridge half 3, there are formed first and second recording and/or reproducing apertures 26, 27 for exposing at least a portion of the signal recording area of the magnetic disc housed in the main cartridge body unit 4 to outside in a direction along the radius of the magnetic disc 5. These recording and/or reproducing apertures 26, 27 are disposed at a mid portion in the left-and-right direction of the main cartridge body unit 4 substantially in the form of a rectangle extending from the vicinity of the center opening 25 to the vicinity of the front wall section 15 of the main cartridge body unit 4. The first and second recording and/or reproducing apertures 26, 27 are formed up to the vicinity of the front wall section 15 for extending from the disc housing section 21 towards the front wall section 15 to permit a magnetic head constituting the recording and/or reproducing means for information signals intruded into the main cartridge body unit 4 to scan the magnetic disc 5 housed in the main cartridge body unit 4 up to its outer rim, as shown in Figs.5 and 6.

On the main cartridge body unit 4 is movably mounted a shutter member 28 adapted for opening/closing the first and second recording and/or reproducing apertures 26, 27, as shown in Figs. 1 and 2. The shutter member 28, formed by punching and working a thin metal sheet, includes a first shutter portion 29 for opening/closing the first recording and/or reproducing aperture 26, formed in the upper surface of the main cartridge body unit 4, a second shutter portion 30 for opening/closing the second recording and/or reproducing aperture 27 formed in the lower surface of the main cartridge body unit 4 and a connecting plate 31 for interconnecting the proximal ends of the first and second shutter portions 29, 30 so that the first and second shutter portions 29, 30 are substantially parallel to each other. The connecting plate 31 is protruded on both sides of the first and second shutter portions 29, 30, so that, when the shutter member 28 is mounted on the main cartridge body unit 4, the connecting plate 31 will be extended along the front wall section 15 of the main cartridge body unit 4. These extended portions are formed integrally with first and second cartridge holding portion 32, 33. These cartridge holding portion 32, 33 are formed integrally with lugs in lateral side edges connected to the first and second shutter portions 29, 30 for protruding along the direction of extension of the first and second shutter portions 29, 30, so that the cartridge holding portion 32, 33 are U-shaped in cross-section to fit on the front wall section 15 of the main cartridge body unit 4, as shown in Figs. 1 and 2. The lugs protruded towards the second shutter portion 30 of the first and second cartridge holding portion 32, 33 are formed integrally with a pair of segmented engagement pieces 36, 37 engaged in movement guide grooves 34, 35 formed in the lower surface of the main cartridge body unit 4 on both lateral sides of the secondrecording and/or reproducing aperture 27 for extending along the front wall section 15.

Referring to Figs. 1 and 2, the shutter member 28, constructed as described above, is mounted on the main cartridge body unit 4, by fitting on the main cartridge body unit 4 from the front wall section 15 so that the first and second shutter portions 29, 30 will be extended over the first and second recording and/or reproducing apertures 26, 27, by engaging the first and second cartridge holding portion 32, 33 on the front wall section 15 of the main cartridge body unit 4 and by engaging the paired engagement pieces 36, 37 in the movement guide grooves 34, 35. The shutter member 28, thus mounted on the main cartridge body unit 4, is moved in the direction indicated by arrows A and B in Figs. 1 and 2, between the position in which the first and second shutter portions 29, 30 close the first and second recording and/or reproducing apertures 26, 27 and the position in which the first and second shutter portions 29, 30 open the first and second recording and/or reproducing apertures 26, 27 with the engagement pieces 36, 37 being guided by the movement guide grooves 34, 35.

In the upper and lower surfaces of the main cartridge body unit 4 are formed shutter movement recesses 38, 39 for extending from the rims of the first and second recording and/or reproducing apertures 26, 27 towards the lateral wall section 18 of the main cartridge body unit 4, as shown in Figs.1 and 2. In the front wall section 15 of the main cartridge body unit 4 is also formed a movement recess 40 of a depth corresponding to the thickness of the connecting plate 31 for extending through the range of movement of the shutter member 28. The shutter member 28 is mounted substantially flush with the peripheral surface of the main cartridge body unit 4 by setting the first and second shutter portions 29, 30 in the shutter movement recesses 38, 39 and by setting the connecting plate 31 in the movement recess 40.

The shutter member 28, mounted on the main cartridge body unit 4, is biased by a torsion coil spring 43, as a biasing member arranged in the main cartridge body unit 4, in the direction of closing the first and second recording and/or reproducing apertures 26, 27 as indicated by arrow B in Figs. 1 and 2. The torsion coil spring 43 is arranged at a corner of the main cartridge body unit 4 where the shutter member 28 is located when it has opened the first and second recording and/or reproducing apertures 26, 27, as shown in Fig.3. The torsion coil spring 43 is arranged in the inside of the main cartridge body unit 4, by having its one end retained by the main cartridge body unit 4 and having its other end retained by a spring retainer provided on the first cartridge holder 32, for biasing the shutter member 28 in the direction of closing the first and second recording and/or reproducing apertures 26, 27 as indicated by arrow B in Figs.1 and 2.

In a mid portion of the inner surface of the upper cartridge half 2 constituting the main cartridge body unit 4, there is provided a disc movement controlling rib 45 adapted for controlling the movement of the magnetic disc 5, as shown in Fig.7. This disc movement controlling rib 45 is of a circular profile of an outside diameter such that the rib can be intruded into the swollen-out portion 9 of the center core 8 provided on the magnetic disc 5. The disc movement controlling rib 45 is intruded into the swollen-out portion 9, as shown in Fig.7, to restrict the movement in the planar direction of the magnetic disc 5 and to prevent the outer rim of the magnetic disc from being deformed due to abutment against a partitioning wall section 21 to protect the flexible magnetic disc 5.

When the magnetic disc 5 is moved towards the upper cartridge half 2, the disc movement controlling rib 45 compresses against the bottom surface 9a of the swollen-out portion 9 of the center core 8 to prevent the flange 10 of the center core 8 lying on the upper surface side of the main disc member 6 from contacting with the inner surface of the upper cartridge half 2 to prevent the upper cartridge half 2 of synthetic resin from being cut by the metallic center core 8 to produce chips.

On the outer rim side of the disc movement controlling rib 45, there is formed an annular recess 46 into which is intruded the flange 10 of the center core 8 when the magnetic disc 5 is supported by the disc movement controlling rib 45, as shown in Fig.7. By configuring the annular recess 46 in this manner, the flange 10 can be prevented from being contacted with the inner surface of the upper cartridge half 2 despite the reduced thickness of the main cartridge body unit 4. The inner surface side peripheral rim of the center opening 25, bored in the lower cartridge half 3, is formed integrally with an inclined surface 25a, as shown in Fig.7, for clearing the flange 10 of the center core 8 of an increased thickness.

On the inner surface of the upper cartridge half 2 is protuberantly formed a ring-shaped rib 48 constituting a liner arranging portion 47 in cooperation with the partitioning wall 22 in the manner of encircling the annular recess 46, as shown in Fig.5. The area surrounded by the partitioning wall 22 and the rib 48 is the liner arranging portion 47 formed as a planar surface. In this liner arranging portion 47 is arranged a liner 49 adapted for cleaning the magnetic disc 5 housed within the main cartridge body unit 4 and for protecting the magnetic disc 5, as shown in Fig.5. This liner 49 comprises a first sheet portion 49a and a second liner portion 49b obtained on bisecting a ring-shaped sheet sized so as to be large enough to cover the major surface of the magnetic disc 5. The first sheet portion 49a and the second liner portion 49b are each of a substantially C-shape and include cut-outs 49c and are formed with cut-outs 49c which, when the first and second sheet portions 49a, 49b are arranged in the liner arranging portion 47, are in register with the first recording and/or reproducing aperture 26 to open the first recording and/or reproducing aperture 26 to outside.

An area surrounded by the partitioning wall delimiting wall section 24 of the lower cartridge half 3 also constitutes a liner ranging portion 50, formed as a flat surface. In this liner arranging portion 50 is arranged a liner 51 adapted for cleaning the magnetic disc 5 housed in the main cartridge body unit 4 and for protecting the magnetic disc 5, as shown in Fig.6. This liner 51 is made up of a first sheet portion 51a and a second sheet portion 51b, obtained on bisecting a ring-shaped sheet sized to be large enough to cover the major surface of the main disc member 6 constituting the magnetic disc 5. The first sheet portion 51a and the second sheet portion 51b are each of a substantially C-shape and include cut-outs 51c which, when the first and second sheet portions 51a, 51b are arranged in the liner ranging portion 50, are in register with the second recording and/or reproducing aperture 27 to open the second recording and/or reproducing aperture 27 to outside.

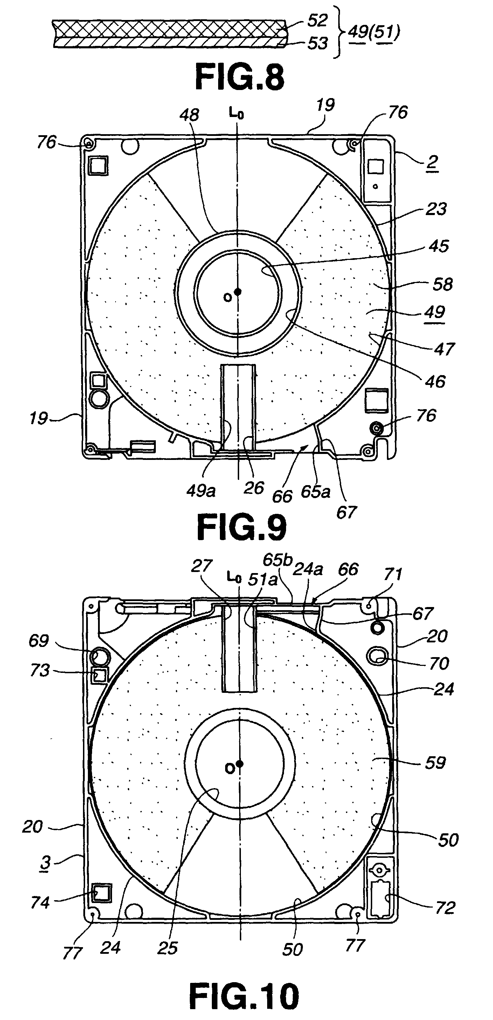

The liners 49, 51 used here are each comprised of a main liner member 52, on one major surface of which is layered a heat-sensitive adhesive layer 53, as shown in Fig.8. The main liner member 52 is fabricated from a non-woven cloth mainly formed of fibers, such as cellulose, e.g., rayon, and hence is air-permeable. The heat-sensitive adhesive layer 53 is used for interrupting air permeation through the air-permeable main liner member 52 and for bonding the liners 49, 51 to the inner surfaces of the upper and lower cartridge halves 2, 3. The heat-sensitive adhesive layer 53 is formed by coating a high molecular material, such as ethylene vinyl acetate or polyethylene terephthalate (PET), exhibiting heat-sensitive adhesion, on one of the major surfaces of the main liner member 52. The heat-sensitive adhesive layer 53 is constituted by bonding a film of polyethylene terephthalate (PET), exhibiting heat-sensitive adhesion, to one of the major surfaces of the main liner member 52.

The liners 49, 50 are of the Young's modulus of 2.0 to 15.0 kgf/mm² and a thickness of 0.2 to 0.7 mm on measurement under a load of 5 g/cm². That is, such liners 49, 51 are used which, on high-speed rotation of the magnetic disc 5, are floated by air pressure between the inner surface of the main cartridge body unit 4 and the liners 49, 51 to realize a sufficient cleaning effect for the magnetic disc 5. On the other hand, such main liner member 52 is used which has a thickness of 0.25 to 0.35 mm and the thickness of the heat-sensitive adhesive layer 53 of 10 to 30 µm. For realizing the above-mentioned properties of the liners 49, 51, such main liner member 52 is used which has the thickness of 0.25 to 0.35 mm under no load application and the thickness of the heat-sensitive adhesive layer 53 of 10 to 30 m under no load application.

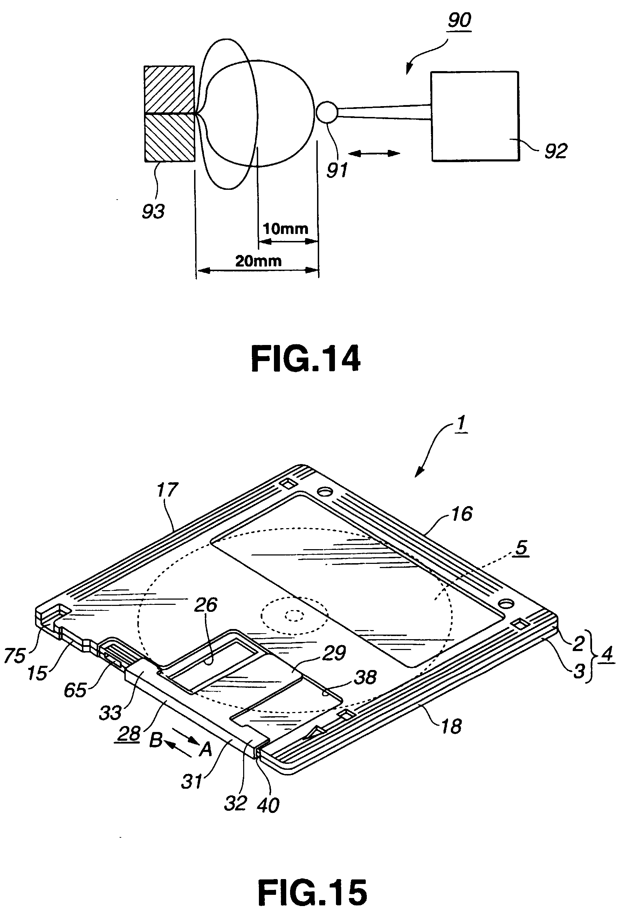

The toughness, that is stiffness, of the liners 49, 51, has also been checked. Thus, using a device shown in Fig. 14, stiffness was measured of a conventional liner comprising a main liner member 52 not carrying a heat-sensitive adhesive layer 53, and of liner samples 1 and 2, each comprising a main liner member 52 used for the disc cartridge 1 and on which is formed a heat-sensitive adhesive layer 53, as shown in Fig.14. A measurement device 90 shown in Fig. 14 includes a measurement member 91 trust by a liner, a strain gauge 92 displaying the thrusting force of the measurement member 91 in g and a supporting member 93 supporting the liner in the form of a loop. The liner is obtained by severing a liner sheet to a pre-set length and is supported on the supporting member 93 so that the diameter will be 20 mm. Using the measurement device 90, the measurement member 91 is moved in a direction approaching to the liner carried by the supporting member 93 so that the diameter will be 20 mm. The liner is flexurally deformed so that the distance between the liner and the supporting member 93 will be 10 mm. The peak value at this time and the value after two minutes were calculated in terms of the weight in g to measure the stiffness. The peak value and the value after two minutes were measured as the samples were flexurally deformed in the longitudinal direction of the liner corresponding to the coiling direction of the liner sheet in a loop and in the width-wise direction of the liner sheet in a loop. The results are shown in Table 1.

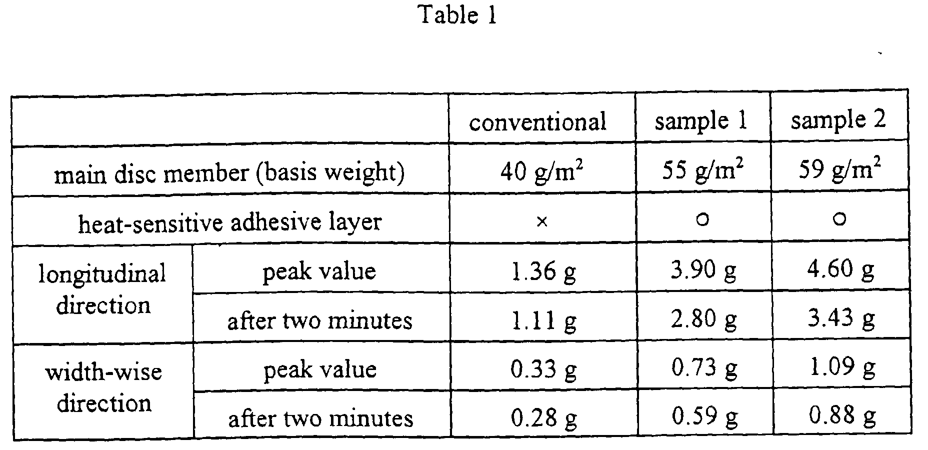

As shown in Table 1, the conventional product is a liner used for a conventional disc cartridge, that is a liner in which the density (basis weight) of a main disc member as a non-woven fabric is 40 g/m² and a heat-sensitive adhesive layer 53 is not provided on the main liner member.

The sample 1 is a liner used for a disc cartridge, that is a liner in which the density (basis weight) of a main disc member 52 as a non-woven fabric is 55 g/m² and a heat-sensitive adhesive layer 53 is not provided on the main liner member.

The sample 2 is a liner used for a disc cartridge, that is a liner in which the density (basis weight) of a main disc member 52 as a non-woven fabric is 59 g/m² and a heat-sensitive adhesive layer 53 is provided on the main liner member.

The results of measurement indicated that, with the conventional product, the peak value and the value after two minutes in the longitudinal direction were 1.36 g and 1.11 g, respectively, with the peak value and the value after two minutes in the width-wise direction being 0.33 g and 0.28 g, respectively, whereas, with the product according to an embodiment of the present invention, the peak value and the value after two minutes in the longitudinal direction were 3.90 g and 2.80 g, respectively, with the peak value and the value after two minutes in the width-wise direction being 0.73 g and 0.59 g, respectively. On the other hand, with the liner sample 2 used for the disc cartridge 1, the peak value and the value after two minutes in the longitudinal direction were 4.60 g and 3.43 g, respectively, with the peak value and the value after two minutes in the width-wise direction being 1.09 g and 0.88 g, respectively.

As may be seen from Table 1, the liner samples 1 and 2, used for the disc cartridge 1, the stiffness value is higher than in the conventional product and hence the cleaning effect can be higher than in the conventional product.

As the high molecular material of the heat-sensitive adhesive layer 53, exhibiting heat-sensitive adhesion, such a material is preferably used which is cured at a temperature lower than the melting point of the material constituting the main liner member 52 to be bonded to the upper and lower cartridge halves 2, 3, in order to prevent the main liner member 52 contacted with the magnetic disc 5 to protect the magnetic disc 5 from being damaged by heat when the liners 49, 51 are bonded to the upper and lower cartridge halves 2, 3.

The liners 49, 51 are bonded to the facing inner surfaces of the upper and lower cartridge halves 2, 3, using a heat welding device employing ultrasonic waves, with the heat-sensitive adhesive layer 53 as the bonding surface, as shown in Figs.5 and 6.

The first sheet portions 49a, 51a and the second sheet portions 49b, 51b are provided with adhesion portions 54, 55 over which the heat-sensitive adhesive layer 53 is bonded to the facing inner surfaces of the upper and lower cartridge halves 2, 3, and with non-adhesion portions 56, 57 corresponding to the remaining portions thereof, with the adhesion portions 54, 55 being sector-shaped regions on both sides of a centerline passing through the center O of the main cartridge body unit 4 to bisect the first and second recording and/or reproducing apertures 26, 27, with the apex angle of each sector being α, as shown in Figs.5 and 6.

It is noted that the adhesion portions 54, 55 are formed so that the angle θ will be ±30° or more, that is so that the adhesion portions 54, 55 will lie over an extent not less than 30° on the upstream and downstream sides of the centerline L₀ relative to the rotating direction of the magnetic disc 5. Since the adhesion portions 54, 55 are formed so that the angle a will be ±30° or more, the first sheet portions 49a, 51a and the second sheet portions 49b, 51b are prevented from contacting with each other in the vicinity of the slide contact portions with a magnetic head 88 to deform the flexible magnetic disc 5. The adhesion portion 54 of the upper cartridge half 2 and the adhesion portion 55 on the lower cartridge half 3 are provided facing each other when the upper and lower cartridge halves 2, 3 are abutted and connected together. The corners of the first sheet portions 49a, 51a and the second sheet portions 49b, 51b are cut off arcuately to prevent the magnetic disc 5 from being damaged on contact of the sheet portions with the rotating magnetic disc 5.

The non-adhesion portions 56, 57 are devoid of the adhesion portions 54, 55 and are adapted for being contacted with the major surface of the magnetic disc 5 run in rotation within the main cartridge body unit 4 to effect the cleaning of the magnetic disc 5. The non-adhesion portions 56, 57 are provided to have a length such that, when the magnetic disc 5 is run in rotation, the non-adhesion portions 56, 57 are separated from the inner surfaces of the upper and lower cartridge halves 2, 3 into contact with the major surface of the rotating magnetic disc 5. That is, the non-adhesion portions 56, 57 are formed over an area of not less than ±30° from the centerline L₀ on both sides of the first and second recording and/or reproducing apertures 26, 27 to prevent the magnetic disc 5 from being flexurally deformed by the non-adhesion portions 56, 57 at the positions corresponding to the first and second recording and/or reproducing apertures 26, 27.

In the examples shown in Figs.5 and 6, the non-adhesion portions 56, 57 are formed towards the ends of the first sheet portions 49a, 51a lying on the upstream side relative to the direction of the arrow R1 in Figs.5 and 6 corresponding to the rotational direction of the magnetic disc 5, with the adhesion portions 54, 55 being formed over the angle α of approximately 120° on both sides of the first and second recording and/or reproducing apertures 26, 27 from the centerline L0, with the non-adhesion portions 56, 57 being formed in the remaining region.

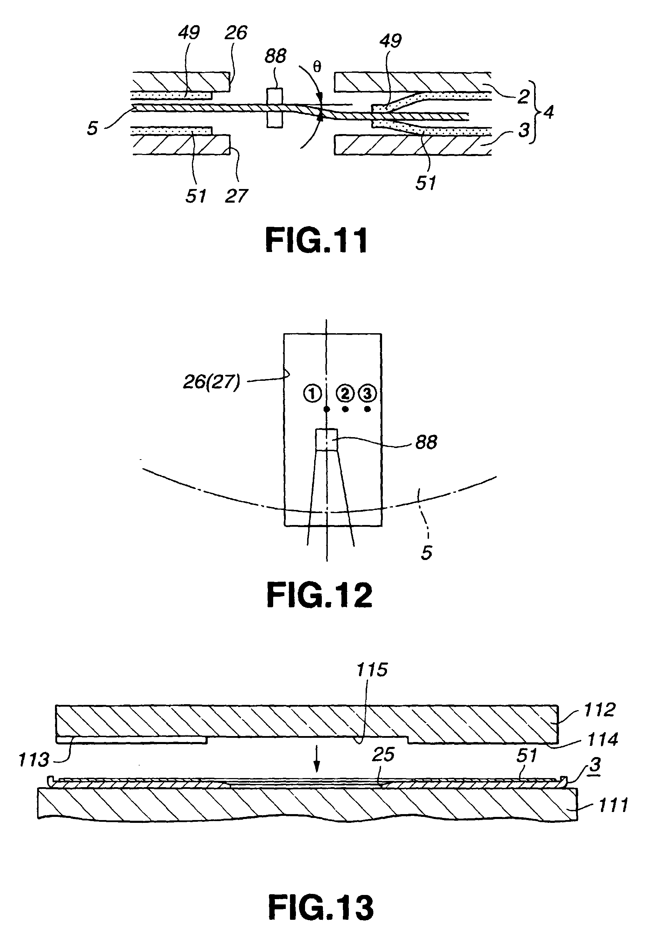

In a case wherein the adhesion portions 54, 55 are formed over an extent of at least 30° on both sides of the first and second recording and/or reproducing apertures 26, 27 from the centerline L₀ passing through the center O of the main cartridge body unit 4 to bisect the first and second recording and/or reproducing apertures 26, 27, the amount of flexural deformation of the magnetic disc 5 with respect to the magnetic head 88 was checked. Here, the angle of flexure θ of the magnetic disc 5 was measured at a position where the magnetic disc has sliding contact with the magnetic disc 5. This angle of flexure θ was measured by illuminating the laser light from the vicinity of the magnetic head 88 towards the upstream side relative to the rotating direction of the magnetic disc to three points spaced apart from one another by a small distance, as shown in Fig. 12, measuring the distance between the light emitting source and the magnetic disc to measure the displacement of the magnetic disc 5, using a laser displacement gauge, and by calculating the displacement in terms of the flexure angle θ.

The sample A is prepared by a system similar to that of a conventional disc cartridge. That is, a lifter is arranged in the vicinity of the first and second recording and/or reproducing apertures 26, 27 and the liner is contacted with the magnetic disc 5 on the upstream side of the first and second recording and/or reproducing apertures 26, 27 relative to the rotating direction of the magnetic disc 5.

The sample B is prepared in accordance with an embodiment of the present invention, that is the adhesion portions 54, 55 are formed over a range of 30° from the centerline L₀ on both sides of the first and second recording and/or reproducing apertures 26, 27.

The sample C is prepared in accordance with an embodiment of the present invention, that is the adhesion portions 54, 55 are formed over a range of 45° from the centerline L₀ on both sides of the first and second recording and/or reproducing apertures 26, 27.

The sample D is prepared in accordance with an embodiment of the present invention, that is the adhesion portions 54, 55 are formed over a range of 90° from the centerline L₀ on both sides of the first and second recording and/or reproducing apertures 26, 27.

The sample E is prepared in accordance with an embodiment of the present invention, that is the adhesion portions 54, 55 are formed over a range of 180° from the centerline L₀ on both sides of the first and second recording and/or reproducing apertures 26, 27.

The results are shown in Table 2:

**Table 2**

| | angle of flexure (°) |
|---|---|
| sample A | 1.2 to 1.4 |
| sample B | 1.0 to 1.2 |
| sample C | 0.8 to 1.0 |
| sample D | 0.6 to 0.8 |
| sample E | 0.2 to 0.5 |

As may be seen from Table 2, when the adhesion portions 54, 55 are formed over an extent of 30° from the centerline L₀ on both sides of the first and second recording and/or reproducing apertures 26, 27, the angle of flexure θ could be 1.0 to 1.2°, with the amount of flexural deformation of the magnetic disc 5 being extremely small. It was confirmed that, from the sample B to the sample E through the samples C and D, the extent of formation of the adhesion portions 54, 55 from the centerline L₀ bisecting the first and second recording and/or reproducing apertures 26, 27 becomes wider with the angle of flexure θ being correspondingly decreased to decrease the amount of fiexural deformation of the magnetic disc 5. It may be confirmed from this that the extent of forming the adhesion portions 54, 55 not less than 30° from the centerline L₀ is desirable, with the extent of not less than 45° from the centerline L₀ being more preferred and with the extent of not less than 90° from the centerline L0 being most preferred.

Using the samples A and D, the time which elapses until occurrence of the recording and/or reproducing errors was checked.

**Table 3**

| | error occurring time |
|---|---|
| sample A | 89h |
| sample B | not less than 336 h |

It may be verified from Table 3 that, with the sample A, the recording and/or reproducing error occurred in 89 hours, whereas, with the sample D, the recording and/or reproducing error did not occur for longer than 336 hours. If the adhesion portions 54, 55 are formed over an extent of not less than 30° on both sides of the first and second recording and/or reproducing apertures 26, 27 of the centerline L₀, the time which elapses until occurrence of the recording and/or reproducing error can be lengthened appreciably, thus demonstrating that the non-adhesion portions 56, 57 exhibit a cleaning effect markedly superior to that of the conventional system. The portions on the inner surfaces of the upper and lower cartridge halves 2, 3 faced by the non-adhesion portions 56, 57 of the liners 49, 51 may be roughed surfaces, as shown in Figs.9 and 10. By forming the roughed surfaces, the non-adhesion portions 56, 57 may be prevented from being stuck to the inner surfaces of the upper and lower cartridge halves 2, 3 to obstruct separation of the non-adhesion portions 56, 57 from the inner surfaces under a load applied to the liners 49, 51 from the magnetic disc 5.

As for the roughed surfaces 58, 59, the main liner member 52 was prepared from a non-woven cloth mainly composed of cellulose fibers such as rayon (trade name), whilst the heat-sensitive adhesive layer 53 was formed of ethylene vinyl acetate. The liners 49, 51 thus prepared were set on test plates 101 with different surface roughness (Rz). On the liners 49, 51 was set a weight of approximately 3 g, which is about twice the weight of the center core 8 mounted on the magnetic disc 5. The resulting assembly was preserved in a high temperature high humidity condition of the temperature of 60°C and the humidity of 90% for one week and substantially reset to the ambient temperature. The ends of the liners 49, 51 were uplifted and the state of bonding thereof to the test plates was checked visually.

At this time, the liners 49, 51 were set so that the heat-sensitive adhesive layer 53 is directed to the surface of the test plate 101. The test plate 101 was formed of an ABS resin similar to that of the upper and lower cartridge halves 2, 3.

As a result, when the liners 49, 51 were set on the plate 101 having a mirror surface, the trace of the occurrence of bonding was observed. When the liners 49, 51 were set on the test plate 101 with a surface roughness Rz of 3 to 4 µm, the trace of the occurrence of bonding was observed only slightly.

When the liners 49, 51 were set on the test plates 101 with surface roughness Rz of 8 to 10 µm, 12 to 15 µm and 17 to 19 µm, no trace of the bonding occurrence was noticed.

When an ABS resin is formed on the test plate 101 having a surface roughness Rz exceeding 20 µm, molding defects due to large projections ascribable to variations in mold releasing states from the die mold were produced.

Based on the above results, the roughed surfaces 58, 59, provided for preventing the non-adhesion portions 56, 57 from becoming non-detachably affixed to the inner surfaces of the upper and, lower cartridge halves 2, 3, are formed to an average roughness of 5 to 20 µm Rz.

Taking an example of a thermal welding device used for bonding the liner to the liner arranging portion 50, the method of bonding the liner 51 to the liner arranging portion 50 is explained. For mounting the liner 51 to the lower cartridge half 3, the lower cartridge half 3 is set on a welding table 111 of the thermal welding device, with the inner surface of the lower cartridge half 3 facing downwards, as shown in Fig. 13. The ring-shaped liner 51 is set in position on the inner surface of the lower cartridge half 3 for surrounding the center opening 25. The liner 51 is mounted on the inner surface of the lower cartridge half 3 by applying a thermal welding hone 112 of the thermal welding device, applying ultrasonic waves thereto to fuse the heat-sensitive adhesive layer 53 provided on the liner 51 to bond the heat-sensitive adhesive layer 53 to the inner surface of the lower cartridge half 3 to attach the liner 51 to the inner surface of the lower cartridge half 3.

The thermal welding hone 112 used is dimensioned substantially in agreement with the outer profile of the liner 51. In the portion of the liner in register with the non-adhesion portion 57 is formed a cut-out 113 so that, when a contact surface 114 for application of ultrasonic waves is contacted with the adhesion portion 55, the contact surface is not contacted with the non-adhesion portion 57. Centrally of the thermal welding hone 112 is formed a recess 115 to clear the center opening 25.

When the thermal welding hone 112, configured as described above, is applied against the liner 51 arranged on the inner surface of the lower cartridge half 3, and ultrasonic wave is applied thereto, the portion of the heat-sensitive adhesive layer 53 of the liner 51 contacted with the contact surface 114 is fused and bonded to the inner surface of the lower cartridge half 3 to produce the adhesion portion 55. However, the portion of the heat-sensitive adhesive layer 53 in register with the cut-out 113 is left as the non-adhesion portion 57 not bonded to the inner surface of the lower cartridge half 3 since no ultrasonic waves are applied thereto. By employing the thermal welding hone 112, configured as described above, the non-adhesion portion 57 and the adhesion portion 55 can be formed simultaneously to attach the liner 51 to the lower cartridge half 3.

Meanwhile, the disc cartridge 1 is provided with an exhaust port 65 for discharging air in the disc housing section 21 as a space surrounded by the partitioning wall 22 to outside the main cartridge body unit 4 and an exhaust duct 66 communicating with the exhaust port 65, as shown in Figs. 1 and 2. The exhaust port 65 is formed by partially segmenting the front wall section 15 of the main cartridge body unit 4 and is provided at such a position that the exhaust port 65 is closed by a portion of the shutter member 28 when the shutter member 28 is at a position of closing the first and second recording and/or reproducing apertures 26, 27, with the exhaust port 65 being opened when the shutter member 28 is moved to a position of opening the first and second recording and/or reproducing apertures 26, 27, as shown in Fig. 15.

Specifically, the exhaust port 65 is provided on the opposite side with respect to the torsion coil spring 43 biasing the shutter member 28 in a direction of closing the first and second recording and/or reproducing apertures 26, 27, with the shutter member 28 in-between, so that, when the shutter member 28 is in the position of closing the first and second recording and/or reproducing apertures 26, 27 as shown in Figs. 1 and 2, the exhaust port 65 is closed by the second cartridge holding portion 33 protruded laterally of the first and second shutter portions

The exhaust port 65 is formed by forming cut-out recesses 65a, 65b in the portions of the upstanding wall sections 19, 20 of the upper and lower cartridge halves 2, 3 constituting the front wall section 15 of the main cartridge body unit 4, so that the cut-out recesses 65a, 65b face each other, and by abutting the upstanding wall sections 19, 20 to each other.

Since the exhaust port 65 is provided at such a position that, when the shutter member 28 is at the position of closing the first and second recording and/or reproducing apertures 26, 27, as shown in Figs. 1 and 2, the exhaust port 65 is closed by a portion of the shutter member 28, it is possible to prevent dust and dirt from intruding into the inside of the main cartridge body unit 4 through the exhaust port 65 when the disc cartridge is not loaded on the disc recording and/or reproducing apparatus, such as during warehousing.

The exhaust duct 66 for establishing communication between the disc housing section 21 and the exhaust port 65 and for guiding the air in the disc housing section 21 towards the exhaust port 65 is formed by providing cut-outs 23a, 24a in portions of the partitioning wall delimiting wall sections 23,24 constituting the partitioning wall 22 delimiting the disc housing section 21, as shown in Figs.5 and 6. These cut-outs 23a, 24a are formed facing the exhaust port 65 of the partitioning wall 22.

On one side of the exhaust duct 66 leading from the partitioning wall 22 to the exhaust port 65 is formed an air guide unit 67 adapted for guiding air from the disc housing section 21 to the exhaust port 65.

When the magnetic disc 5 housed in the main cartridge body unit 4 is clamped by the disc rotating driving unit and thereby run in rotation in the direction indicated by arrow R₁ in Figs.5 and 6, there is generated, with rotation of the magnetic disc 5, a spiral airstream proceeding from the center opening 25 towards the outer rim of the magnetic disc 5 in the same direction as the direction of rotation of the magnetic disc 5 within the disc housing section 21. Thus, the air guide unit 67 is provided on one side of the exhaust duct 66 opposite to the airstream, in order to positively guide the air in the disc housing section 21 towards the exhaust port 65. By providing the air guide unit 67 at a position opposite to the airstream, the airstream flowing spirally from the center portion of the disc housing section 21 towards its outer rim collides against the air guide unit 67 and is guided thereby to proceed towards the exhaust port 65 through which it is discharged to outside the main cartridge body unit 4. Since the air in the disc housing section 21 is discharged out of the main cartridge body unit 4 with rotation of the magnetic disc 5, it is possible to discharge dust and dirt intruded into the disc housing section 21 from the main cartridge body unit 4 along with air discharged from the main cartridge body unit 4.

In the lower surface of the main cartridge body unit 4 constituting the disc cartridge 1, there are bored first and second positioning reference holes 69, 70 engaged by positioning pins provided on the disc recording and/or reproducing apparatus for setting the loading position of the disc cartridge 1, as shown in Fig.2. These positioning reference holes 69, 70 are formed in the front wall section 15 on both sides of the direction of movement of the shutter member 28. Specifically, the first positioning reference hole 69 is circular in profile in meeting with the positioning pin having a circular cross-section, whilst the second positioning reference hole 70 is elongated, with the direction of movement of the shutter member 28 as its long axis, in order to permit correction of the engagement position of the positioning pin therein.

On one corner of the lower surface of the main cartridge body unit 4, towards the rear wall section 16, there is movably mounted a mistaken recording inhibiting member 71, as shown in Fig.2. The mistaken recording inhibiting member 71 opens/closes a mistaken recording inhibiting hole 72 bored in the main cartridge body unit 4 to make selection between the state enabling recording of information signals on the magnetic disc 5 and a state inhibiting recording of the information signals. Towards the opposite side corner of the rear wall section 16 in the lower surface of the main cartridge body unit 4, in the vicinity of the first positioning reference hole 69, there are bored first and second recording capacity discriminating holes 73, 74 for indicating the recording capacity of the magnetic disc 5 housed in the disc cartridge 1, as shown in Fig.2. On the opposite side corner of the upper surface towards the front wall section 15 of the main cartridge body unit 4, there is provided a loading control section 75 for inhibiting loading on the disc recording and/or reproducing apparatus employing a disc cartridge housing a magnetic disc of a recording capacity different from that of the magnetic disc 5 of the disc cartridge 1 embodying the present invention. The loading control section 75 is formed as a recess opened on the front wall section 15 of the main cartridge body unit 4.

On the corners of the inner surfaces of the upper and lower cartridge halves 2, 3 making up the main cartridge body unit 4, there are formed welding projections 76, 77, abutted to and engaged with each other, as shown in Figs.5 and 6. The main cartridge body unit 4 is constituted by abutting the welding projections 76, 77 to each other, abutting the upstanding wall sections 19, 20 to each other and by welding the welding projections 76, 77 and the upstanding wall sections 19, 20 together by e.g., ultrasonic waves.

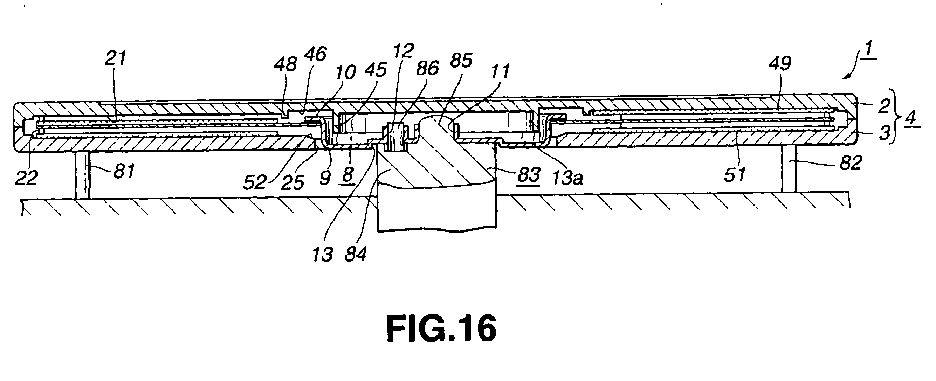

When loaded on the disc recording and/or reproducing apparatus employing the disc cartridge as the recording medium, the disc cartridge 1 is positioned in the horizontal direction by positioning pins 81, 82 provided on the disc recording and/or reproducing apparatus in the first and second positioning reference holes 69, 70, as shown in Fig.16, while being set as to the loading height position by supporting the corners on the rear side wall section 16 of the main cartridge body unit 4 by height position setting pins, not shown.

When the disc cartridge 1 is loaded on the disc recording and/or reproducing apparatus, the center core 8 facing the center opening 25 bored in the lower surface of the main cartridge body unit 4 is set on a disc table 84 of the disc rotating driving unit 83 provided on the disc recording and/or reproducing apparatus, whilst a spindle shaft 85 of the disc rotating driving unit 83 is introduced into the spindle shaft inserting opening 11, with the driving pin 86 being introduced into the driving pin inserting opening 12. At this time, the center core 8 is set on the disc table 84 so that the disc setting portion 13 provided on the bottom surface 9a of the swollen-out portion 9 is fitted to the disc table 84. The center core 8 also is attracted by a magnet 87 provided on the disc table 84 to permit the magnetic disc 5 to be rotated in unison with the disc table 84. Since the magnetic disc 5 is set on the disc table 84 at this time through the recessed disc setting portion 13 formed in the center core 8, the spindle shaft 85 is inserted into the spindle shaft inserting opening 11 easily in such a manner as to prevent the deviation of the loading position with respect to the disc table 84. It is moreover possible to control the deviation in the loading position relative to the disc table 84 to permit the driving pin 86 to be passed through the driving pin inserting opening 12. If, with the magnetic disc 5 being enabled to be rotated in unison with the disc table 84, a spindle motor not shown, of the disc rotating driving unit 83 is run in rotation, the magnetic disc 5 is run in rotation in synchronism with the rotation of the disc table 84, about the spindle shaft 85 as the center of rotation.

When the disc cartridge 1 is loaded on the disc rotating driving unit, the shutter member 28 is moved in the direction indicated by arrow A in Figs. 1 and 2, against the bias of the torsion coil spring 43, by the shutter opening mechanism provided on the disc recording and/or reproducing apparatus, to open the first and second recording and/or reproducing apertures 26, 27. The exhaust port 65 formed in the front wall section 15 of the main cartridge body unit 4 is also opened at this time, as shown in Fig. 15.

When the disc cartridge 1 is positioned in the horizontal and vertical directions and loaded in this condition, the spindle shaft 85 is passed through the spindle shaft inserting opening 11, the driving pin 86 is passed through the driving pin inserting opening 12, and the magnetic disc 5, enabled to be rotated in unison with the disc table 84, is set on the disc table 84, the magnetic disc 5 is floated from the lower cartridge half 3 of the main cartridge body unit 4 and set at a mid position along the direction of thickness of the main cartridge body unit 4.

If the magnetic disc 5, loaded in position on the disc rotating driving unit 83, is run in rotation at an rpm not less than 3000 rpm, for example, at an rpm from 3000 to 3600 rpm, there is generated an airstream flowing spirally in the disc housing section 21 along the rotating direction of the magnetic disc 5. This airstream is a spiral stream proceeding from the center towards the outer rim of the main cartridge body unit 4 and operates for sucking air from the center opening 25 provided in the lower surface of the main cartridge body unit 4 into its inside. When the air is a sucked from the center opening 25, there is produced a spiral airstream which pressurizes the area between the magnetic disc 5 and the lower cartridge half 3 constituting the lower surface of the main cartridge body unit 4.

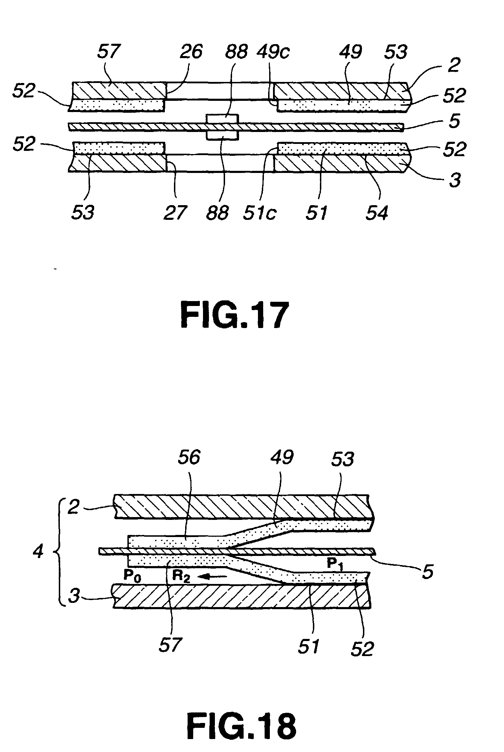

When the magnetic disc 5 is run in rotation, the air sucked from the center opening 25 provided in the main cartridge body unit 4 flows into a space between the inner surface of the lower cartridge half 3 and the non-adhesion portion 57 of the liner 51 arranged on the side of the lower cartridge half 3, as shown in Fig. 18. Since the non-permeable heat-sensitive adhesive layer 53 is provided between the surface of the non-adhesion portion 57 facing the inner surface of the lower cartridge half 3, the air flowing into the space between the inner surface of the lower cartridge half 3 and the non-adhesion portion 57 of the liner 51 is prohibited from traversing the liner 51 to flow into the space between the liner 51 and the magnetic disc 5. Thus, a spiral airstream R₁ is generated between the inner surface of the lower cartridge half 3 and the non-adhesion portion 57 of the liner 51, as shown in Fig. 18, to increase the pressure P₀ between the inner surface of the lower cartridge half 3 and the non-adhesion portion 57 of the liner 51 so as to be larger than the pressure P₁ between the liner 51 and the magnetic disc 5. Due to this pressure differential, the non-adhesion portion 57 of the liner 51 is flexurally deformed into contact with the opposite side major surface of the magnetic disc 5.

As the non-adhesion portion 57 of the liner 51 arranged on the lower cartridge half 3 is floated to increase the pressure P₁ between the liner 51 of the lower cartridge half 3 and the magnetic disc 5, the non-adhesion portion 57 is rotated under a force which floats the non-adhesion portion 57 towards the upper cartridge half 2. On the other hand, since the non-adhesion portion 56 of the liner 49 provided on the upper cartridge half 2 is flexurally deformed by its own gravity towards the magnetic disc 5, the non-adhesion portion 56 is rotated under a force which floats the non-adhesion portion 56 towards the upper cartridge half 2.

Thus, with the disc cartridge 1, the liners 49, 51 are partially contacted with both major surfaces of the magnetic disc 5 when the magnetic disc 5 is run in rotation, thus enabling the cleaning of the magnetic disc 5. Since the liners 49, 51 are not contacted with the magnetic disc 5 by pressurizing means, such as lifters, as in a conventional disc cartridge, there is no risk of applying the pressure to obstruct the rotation of the magnetic disc 5, or of scratching the surface of the magnetic disc 5.

On the other hand, the magnetic head 88, adapted for recording and/or reproducing information signals on or from the magnetic disc 5, is intruded into the main cartridge body unit 4 via the first and second recording and/or reproducing apertures 26, 27 into sliding contact with the magnetic disc 5. Since the liners 49, 51 are bonded at the adhesion portions 54, 55 thereof to the inner surface of the main cartridge body unit 4, in the vicinity of the first and second recording and/or reproducing apertures 26, 27, as shown in Fig.17, there is no risk of the contact with the rotating magnetic disc 5. Since the magnetic disc 5 is not subjected to flexural deformation in the vicinity of the first and second recording and/or reproducing apertures 26, 27, the magnetic head 88 is able to reliably record and/or reproduce the magnetic disc 5.

Moreover, air sucked into the main cartridge body unit 4 is discharged as an airstream by rotation of the magnetic disc 5. Since dust and dirt produced from the magnetic disc 5 cleaned by the liners 49, 50 are discharged along with the airstream from the exhaust port 65, without being left over in the main cartridge body unit 4, it is possible to reliably prevent damages to the magnetic disc 5 or to the magnetic head 88. Although the above-described disc cartridge 1 has the exhaust port 65 for discharging the air from the inside of the main cartridge body unit 4, it is not mandatory to provide the exhaust port 65.

Although the adhesion portions 54, 55 and the non-adhesion portions 56, 57 are arranged facing each other in the above-described disc cartridge 1, this is not mandatory provided that the rotating magnetic disc 5 is clinched in-between the non-adhesion portions 56, 57.

In the disc-shaped recording medium in which the center core 8 is not provided in the center opening 7 of the main disc member 6, as in the case of the above-described magnetic disc 5, the center opening formed centrally of the main disc member, inclusive of rim portions thereof, operate as clamping portions for the disc rotating driving unit.

### Alternative Embodiment

In the above-described embodiment, the liners 49, 50 provided on the inner surfaces of the upper and lower cartridge halves 2, 3 are split into first sheet portions 49a, 51a and second sheet portions 49b, 51b, while the non-adhesion portions 56, 57 are provided at the terminal ends of the first sheet portions 49a, 51a. It is noted that the proximal and distal ends of the non-adhesion portions 56, 57 operate as connecting portions to the adhesion portions 54, 55 and as free ends, respectively, with the non-adhesion portions 56, 57 being floated from the inner surfaces of the upper and lower cartridge halves 2, 3 into contact with the magnetic disc 5.

In the present modification, liners 149, 151 each comprise a main liner member 52 of a non-woven cloth and a heat-sensitive adhesive layer 53 layered thereon, thus exhibiting softness to permit facilitated flexural deformation. The liners 49, 50 may be arranged on the inner surfaces of the upper and lower cartridge halves 2, 3 by exploiting these properties.

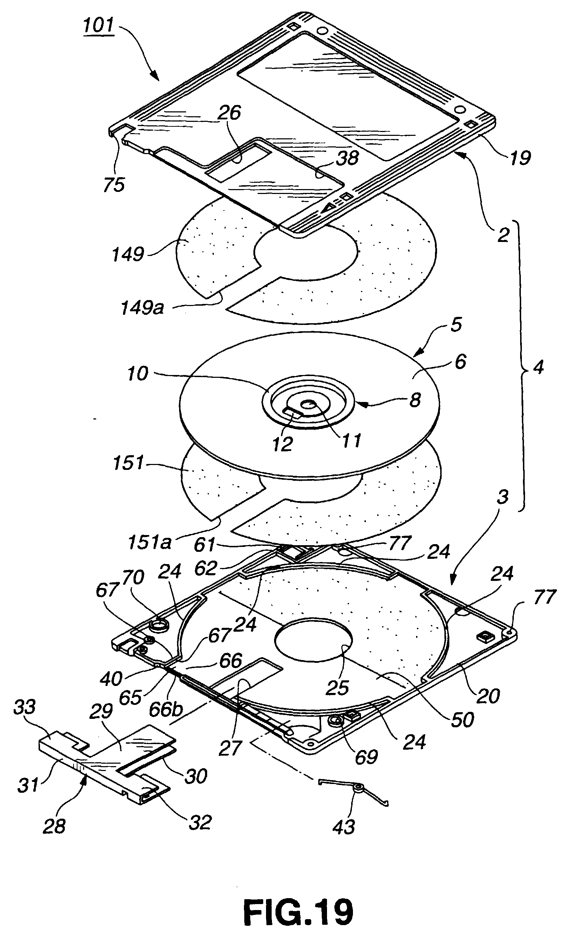

The liners 149, 151 are each formed integrally and are formed as a ring sized to be large enough to cover the major surface of the main disc member 6 of the magnetic disc 5, as shown in Fig. 19. These liners 149, 151 are provided with cut-outs 149a, 151a which, when the liners are arranged in the liner arranging portions 47, 50 of the upper and lower cartridge halves 2, 3, are adapted for opening the portions thereof in register with the first and second recording and/or reproducing apertures 26, 27.

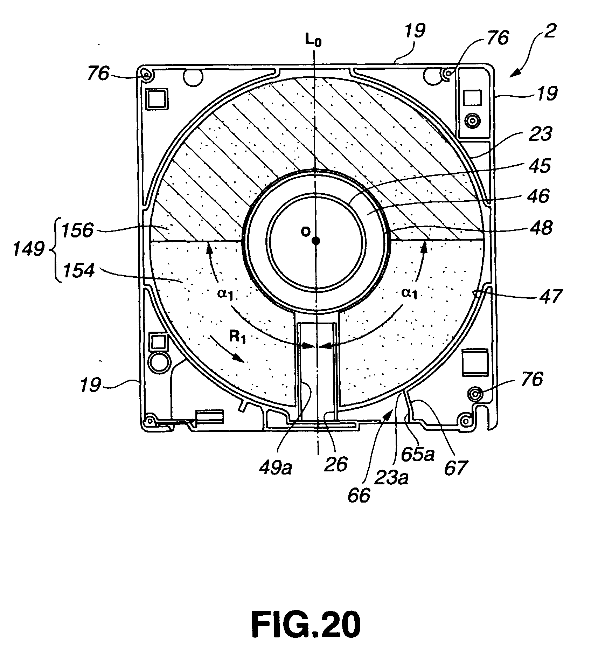

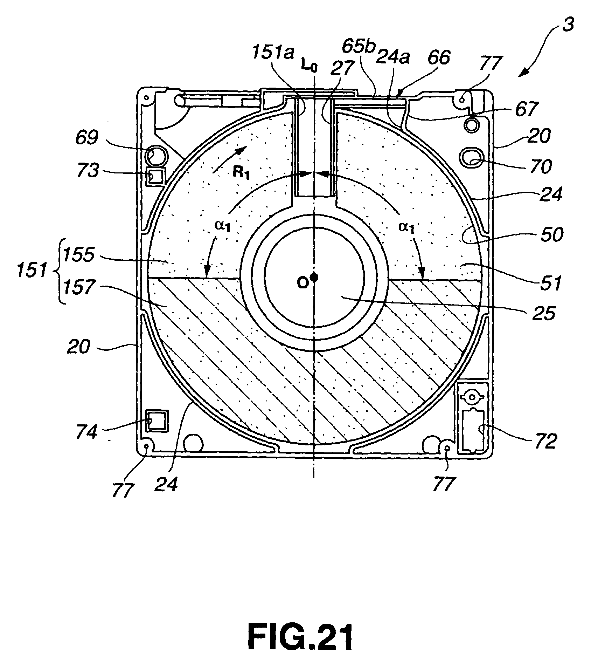

These liner portions 149, 151 are provided with adhesion portions 154, 155 over which the heat-sensitive adhesive layer 53 is bonded to the facing inner surfaces of the upper and lower cartridge halves 2, 3, and with non-adhesion portions 156, 157 corresponding to the remaining portions thereof with the adhesion portions 54, 55, shown shaded, being sector-shaped regions on both sides of a centerline L₀ passing through the center O of the main cartridge body unit 4 to bisect the first and second recording and/or reproducing apertures 26, 27, with an angle of each sector being α, as shown in Figs.20 and 21. That is, with the liners 149, 151, both sides of the non-adhesion portions 156, 157 serve as adhesion portions 154, 155 with respect to the facing inner surfaces of the upper and lower cartridge halves 2, 3, with the result that both ends along the circumferential direction of the non-adhesion portions 156, 157 connect endlessly to the adhesion portions 154, 155.

It is noted that the adhesion portions 154, 155 are formed over an extent of not less than 30° from the centerline L₀ on the upstream and downstream sides with respect to the direction of rotation of the magnetic disc 5 (apex angle α1 being not less than ±30°). Since the adhesion portions 154, 155 are formed with the angle α1 being not less than ± 30°, the liners 149, 151 are contacted with the magnetic disc 5 as the liners are floated from the inner surfaces of the upper and lower cartridge halves 2, 3 in the vicinity of the magnetic head 88, to prevent deformation of the flexible magnetic disc 5.

The adhesion portion 154 of the upper cartridge half 2 and the adhesion portion 155 of the lower cartridge half 3 are provided facing each other when the upper and lower cartridge halves 2, 3 are abutted and combined to each other. The non-adhesion portions 156, 157 are areas other than the adhesion portions 154, 155 and are floated from the inner surfaces of the upper and lower cartridge halves 2, 3 to undergo flexural deformation into contact with the major surface of the magnetic disc 5 rotationally driven within the main cartridge body unit 4, thereby cleaning the magnetic disc 5.

The non-adhesion portions 156, 157 are designed to have an allowance in length sufficient to be flexurally deformed and floated from the inner surfaces of the upper and lower cartridge halves 2, 3 into contact with the major surface of the rotating magnetic disc 5 when the magnetic disc 5 is run in rotation. That is, the non-adhesion portions 156, 157, formed in areas not less than ±30° on both sides of the first and second recording and/or reproducing apertures 26, 27 from the centerline L₀ to prevent the non-adhesion portions 156, 157 from flexurally deforming the magnetic disc 5 in the portions registering with the first and second recording and/or reproducing apertures 26, 27. Meanwhile, in an example shown in Figs.20 and 21, the non-adhesion portions 156, 157 are formed with an angle α1 on both sides of the first and second recording and/or reproducing apertures 26, 27 from the centerline L₀, and connect endlessly to the adhesion portions 154, 155 occupying the remaining portions. In the case of the liners 149, 151 arranged in the disc cartridge 101 housing the magnetic disc 5 with a diameter of 3.5 inch, the area of the non-adhesion portions 156, 157 is approximately 24 cm².

The liners 149, 151 are as tabulated in Table 4.

**Table 4**

| | area of non-adhesion portions (cm2) | stiffness (g) | area in which to install the liners | dust and dirt test (number of errors increased) |
|---|---|---|---|---|
| sample 1 | ca. 24 | 3 | a | 0 |
| sample 2 | ca. 24 | 7 | a | 10 |
| sample 3 | ca. 24 | 10 | a | 25 |
| sample 4 | ca. 12 | 3 | a | 7 |
| sample 5 | ca. 24 | 3 | b | 3 |

In Table 4, stiffnesses of the samples 1 to 3 are 3g, 7g and 10g, respectively. The sample 4 is of a stiffness of 3g and is configured so that the adhesion portions 154, 155 are of an angle α₂ of approximately 135° from the centerline L₀ on both sides of the first and second recording and/or reproducing apertures 26, 27, with the remaining 90° area being the non-adhesion portions 156, 157, with the area of the non-adhesion portions 156, 157 being approximately 12 cm². The area astride both sides of the recording and/or reproducing apertures 26, 27 is called an installment area *b* and an area not astride both sides of the recording and/or reproducing apertures 26, 27 is called an installment area *a*.

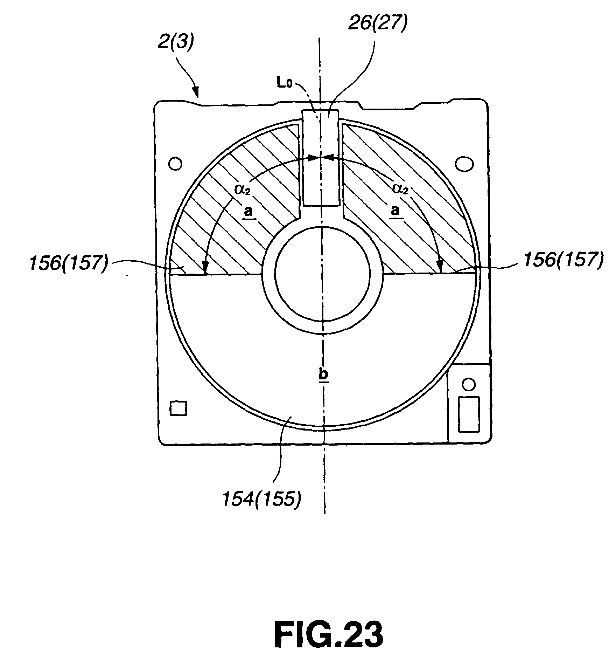

The sample 5 is of a stiffness of 3g and, as shown in Fig.23, the non-adhesion portions 156, 157 are formed over an extent of 180° towards the installment area *b*, while the adhesion portions 154, 155 are formed over an extent of the remaining 180°.

It may be seen from the results of Table 4 that the higher the stiffness, the more the number of errors tends to be, and that the number of errors is larger even if the area of the non-adhesion portion is small.

The dust and dirt test was conducted under the conditions of the dust and dirt type, flyash; dust and dirt concentration, 0.5 mg/m³; sample preserving state, lower cartridge half being set above; preserving time, one hour; and of the error check method, data before and after preservation in a dust and dirt tester being measured by a hard error check drive.

The portions of the inner surfaces of the upper and lower cartridge halves 2, 3 facing the non-adhesion portions 156, 157 of the liners 149, 151 may be designed as roughed surfaces in the same way as in the disc cartridge 1. By roughing the inner surfaces of the upper and lower cartridge halves 2, 3, the non-adhesion potions 156, 157 may be prevented from being tightly contacted with the inner surfaces of the upper and lower cartridge halves 2, 3 without being separated or floated from the inner surfacers of the upper and lower cartridge halves 2, 3, even if a load such as that of the magnetic disc 5 is applied to the liners 149, 151..

The liners 149, 151 are also bonded to the inner surfaces of the upper and lower cartridge halves 2,3, using the thermal welding device described above with reference to Fig.13.

In the disc cartridge 101, having the liners 149, 151 including non-adhesion portions 156, 157 connecting in an endless fashion to the adhesion portions 154, 155, the magnetic disc 5 rotationally driven in the main cartridge body unit 4 is cleaned, as in the case of the disc cartridge 1 described above.

That is, if the magnetic disc 5, loaded in position on the disc rotating driving unit 83, is run in rotation at an rpm of not less than 3000 rpm, for example, at an rpm from 3000 to 3600 rpm, there is generated an airstream flowing spirally in the disc housing section 21 along the rotating direction of the magnetic disc 5. This airstream is such a one flowing in the disc housing section 21 spirally along the rotating direction of the magnetic disc 5 to flow from the mid portion towards the outer periphery of the main cartridge body unit 4 for sucking air from the center opening 25 into the inside of the main cartridge body unit 4. Should air be sucked through the center opening 25, there is generated a spiral airstream pressurizing the area between the lower cartridge half 3 constituting the lower surface of the main cartridge body unit 4 and the magnetic disc 5.

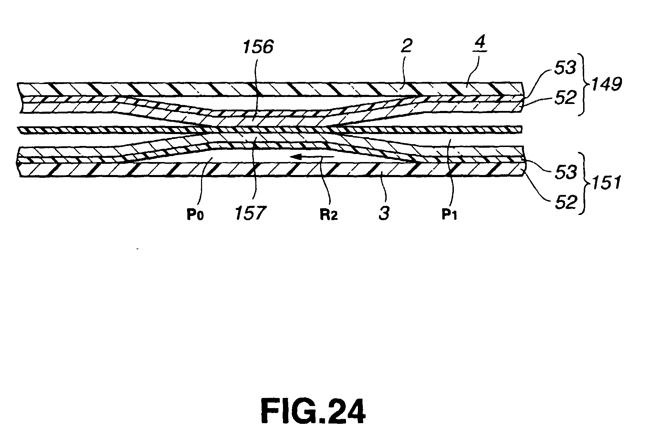

When the magnetic disc 5 is run in rotation, the air sucked from the center opening 25 provided in the main cartridge body unit 4 flows into a space between the inner surface of the lower cartridge half 3 and the non-adhesion portion 157 of the liner 151 arranged on the side of the lower cartridge half 3, as shown in Fig.24. Since the non-permeable heat-sensitive adhesive layer 53 is provided between the surface of the non-adhesion portion 157 facing the inner surface of the lower cartridge half 3, the air flowing into the space between the inner surface of the lower cartridge half 3 and the non-adhesion portion 157 of the liner 151 is prohibited from traversing the liner 151 to flow into the space between the liner 151 and the magnetic disc 5. Thus, a spiral airstream R₂ is generated between the inner surface of the lower cartridge half 3 and the non-adhesion portion 157 of the liner 151, as shown in Fig.24, to increase the pressure P₀ between the inner surface of the lower cartridge half 3 and the non-adhesion portion 157 of the liner 151 so as to be larger than the pressure P₁ between the liner 151 and the magnetic disc 5. Due to this pressure differential, the non-adhesion portion 157 of the liner 151 is flexurally deformed into contact with the opposite side major surface of the magnetic disc 5.

As the non-adhesion portion 157 of the liner 151 arranged on the lower cartridge half 3 is floated to increase the pressure P₁ between the liner 151 of the lower cartridge half 3 and the magnetic disc 5, the non-adhesion portion 157 is rotated under a force which floats the non-adhesion portion 157 towards the upper cartridge half 2. On the other hand, since the non-adhesion portion 156 of the liner 149 provided on the upper cartridge half 2 is flexurally deformed by its own gravity towards the magnetic disc 5, the non-adhesion portion 156 is rotated under a force which floats the non-adhesion portion 156 towards the upper cartridge half 2.

Thus, with the disc cartridge 101, the liners 149, 151 are partially contacted with both major surfaces of the magnetic disc 5, when the magnetic disc 5 is run in rotation, thus enabling the cleaning of the magnetic disc 5. Since the liners 149, 151 are not contacted with the magnetic disc 5 by pressurizing means, such as lifters, as in a conventional disc cartridge, there is no risk of the pressure being applied to obstruct the rotation of the magnetic disc 5, or of scratching the surface of the magnetic disc 5.

On the other hand, the magnetic head 88, adapted for recording and/or reproducing information signals on or from the magnetic disc 5, is intruded into the main cartridge body unit 4 via the first and second recording and/or reproducing apertures 26, 27 into sliding contact with the magnetic disc 5. Since the liners 149, 151 are contacted at the adhesion portions 154, 155 thereof with the inner surface of the main cartridge body unit 4, in the vicinity of the first and second recording and/or reproducing apertures 26, 27, there is no risk of the contact with the rotating magnetic disc 5. Since the magnetic disc 5 is not subjected to flexural deformation in the vicinity of the first and second recording and/or reproducing apertures 26, 27, the magnetic head 88 is able to reliably record and/or reproduce the magnetic disc 5.

The above-described disc cartridge 1 houses the magnetic disc 5. However, embodiments of the present invention may not only be to a disc cartridge housing a flexible disc, but also to disc cartridge housing a disc-shaped recording medium, such as an optical disc or a magneto-optical disc comprising a tough disc substrate with favorable results comparable to these achieved with the above-described disc cartridge.

The disc cartridge according to embodiments of the present invention is adapted for flexurally deforming the non-adhesion portions of the liners arranged in the main cartridge body unit into contact with the magnetic disc rotationally driven in the main cartridge body unit, so that the magnetic disc can be cleaned without applying a large load on the rotating magnetic disc. Since the non-adhesion portions of the liners are arranged in an area excluding an area of ±30° from the centerline bisecting the recording and/or reproducing apertures, the liners can be prevented from contacting with the magnetic disc in the vicinity of the recording and/or reproducing aperture, with the result that the magnetic disc is rotated in a stabilized state in the portion thereof faced by the magnetic head to maintain the constant relative position with respect to the magnetic head recording and/or reproducing information signals to enable the information signals to be recorded and/or reproduced with optimum recording and/or reproducing characteristics.

Moreover, since both sides of the non-adhesion portions operate as the adhesion portions to the main cartridge body unit, the non-adhesion portions are sucked towards the inside of the main cartridge body unit by an airstream generated by rotational driving of the magnetic disc, in the case of a disc cartridge having liners comprising endless non-adhesion portions. The non-adhesion portions, thus sucked, are swollen out smoothly arcuately so that the mid portions thereof are contacted with the magnetic disc to clean the magnetic disc. Even in such case, stable rotation of the magnetic disc is guaranteed at the portions thereof faced by the magnetic head with the result that the relative position of the magnetic disc to the magnetic head recording and/or reproducing information signals can be maintained constant to enable recording and/or reproduction of information signals with optimum recording and/or reproducing characteristics.

## Claims

1. A disc cartridge comprising:
a disc-shaped recording medium having a clamping portion at a center portion thereof for clamping to a rotating driving unit;
a main cartridge body unit for rotationally housing said disc-shaped recording medium therein, said main cartridge body unit being made up of an upper cartridge half and a lower cartridge halt said main cartridge body unit having recording and/or reproducing apertures for exposing at least portions of the signal recording region of the disc-shaped recording medium to outside along a radial direction thereof, said main cartridge body unit also having a center opening at a mid portion of a lower surface thereof for exposing said clamping portion to outside, said main cartridge body unit presenting planar facing surfaces; and
a pair of liners each having a non-permeable heat-sensitive adhesive layer on one surface thereof, said heat-sensitive adhesive layer having an adhesion portion bonded to the inner surface of said main cartridge body unit and a non-adhesion portion separable from the inner surface of said main cartridge body unit, said liners being arranged on the facing inner surfaces of said main cartridge body unit for sandwiching said disc-shaped recording medium in-between;
said non-adhesion portions of said liners being formed in areas excluding a range of ±30° on both sides of said recording and/or reproducing apertures from a centerline bisecting said recording and/or reproducing apertures through the center of said main cartridge body unit.

2. The disc cartridge according to claim 1 wherein
said liners arranged on one and the other inner surfaces of said main cartridge body unit are a first sheet member and a second sheet member obtained on bisecting a ring-shaped sheet sized to be large enough to cover the major surface of said disc-shaped recording medium, and wherein
said non-adhesion portions are formed at the ends of said first and second sheets.

3. The disc cartridge according to claim 1 wherein
said liners arranged on one and the other inner surfaces of said main cartridge body unit are each formed by a sole uninterrupted sheet member and wherein
the non-adhesion portions of said liners connect to said adhesion portions in an endless fashion.

4. The disc cartridge according to claim 1 wherein
said liner is formed by layering a non-permeable heat-sensitive adhesive layer on one surface of an air permeable main liner member formed by a non-woven cloth composed mainly of cellulose fibers.

5. The disc cartridge according to any preceding claim wherein
said main liner member has a thickness of 0.25 to 0.35 mm, with the thickness of the heat-sensitive adhesive layer being 10 to 30 µm.

6. The disc cartridge according to any preceding claim wherein
said disc-shaped recording medium is a magnetic disc rotated at an rpm of not less than 3000.
